# EUROPEAN PATENT APPLICATION

(11) **EP 1 162 249 A2**
(43) Date of publication of application: **12.12.2001**
(21) Application number: 01304763.4
(22) Date of filing: 31.05.2001
(51) Int. Cl.: C09K 3/14, B24D 5/00, B29C 45/13, B24D 18/00

(54) **Moldable abrasive pellets**

(30) Priority: 05.06.2000 US 586811
(71) Applicant: GENERAL ELECTRIC COMPANY, Schenectady, NY 12345 (US)
(72) Inventor: Webb, Steven William, Worthington, Ohio 43085 (US); Einset, Erik Oddmund, Delaware, Ohio 43015 (US)
(74) Representative: Szary, Anne Catherine, Dr.

(57) **Abstract**

Discrete moldable pellets for use in molding parts (*e.g.*, grinding/cut-off wheels) are formed from a moldable resin and abrasive particles. A grinding/cut-off wheel is made by providing: a mold, discrete composite moldable pellets made from a first moldable resin and abrasive particles, and a second moldable resin. The composite pellets and the second moldable resin are co-injected into the mold such that the composite pellets preferentially are distributed about the periphery of the wheel and the second moldable resin preferentially is distributed about the interior of the wheel. The first and second moldable resins then are cured to form the wheel.

## Description

The present invention relates generally to the manufacture of abrasive cutting and grinding segments and more particularly to the manufacture of composite abrasive pellets useful in injection molding of cut-off and grinding wheels.

Grinding wheels of various shapes, sizes, and composition are well-known in the art. Wheels containing superabrasive materials (*e.g.*, diamond or cubic boron nitride, CBN) in the edge or outer periphery of a circular grinding wheel or grinding cup also are well-known in the art in sawing, drilling, dressing, grinding, lapping, polishing, and other abrading applications. For these applications, the grit typically is surrounded in a matrix of a metal, such as Ni, Cu, Fe, Co, Sn, W, Ti, or an alloy thereof, or of a resin, such as phenol formaldehyde or other thermosetting polymeric material. By attaching the matrices to a body or other support, tools may be fabricated having the capability to cut through such hard, abrasive materials as concrete, asphalt, masonry, ceramic, brick, or granite, marble, or other rock. A typical such wheel is formed from a central metal disk having an aperture or a spindle for spinning the wheel in use. The outer periphery of the wheel, then, has a diamond-containing matrix bonded thereto. For wheels where the diamond is surrounded by a resin, the operator often cures the resin and bonds the resinous segments to the inner wheel by compression molding. Conventional bonding resins are used.

For example, U.S. Patent No. 5,167,674 proposes grinding wheels manufactured from a conventional inner core to which is adhesively bonded a mixture of superabrasive grit, a bis-maleimide-triazine addition copolymer resin, free-radical initiator, and catalyst, which mixture is compression molded to form a grinding segment annulus.

U.S. Patent No. 5,314,512 proposes to injection mold saw segments from superabrasive particles and a non-porous thermoplastic polymer. The molded saw segments then are affixed to the periphery of a saw blade.

EP 0 794 850 B1 proposes cutting segments manufactured from superabrasive particles molded with a thermoplastic material wherein the superabrasive particles are oriented in a chosen direction and there is porosity in the molded segments.

U.S. Patents Nos. 4,054,425 and 4,088,729 propose to mold a hub into a phenol-based thermoplastic resin-grinding wheel.

U.S. Patent No. 3,960,516 proposes to manufacture a grinding cup wherein the supporting part is molded as a part of the grinding cup to ensure a secure attachment.

Discrete moldable pellets for use in molding parts, including cutting tools and wear parts (*e.g*., grinding/cut-off wheels, drill bits, reamers, endmills, *etc*.), are formed from a moldable resin and abrasive particles. A grinding/cut-off wheel is made by providing: a mold, discrete composite moldable pellets made from a first moldable resin and abrasive particles, and a second moldable resin. The composite pellets and the second moldable resin are co-injected into the mold such that the composite pellets preferentially are distributed about the periphery of the wheel and the second moldable resin preferentially is distributed about the interior of the wheel. The first and second moldable resins then are cured to form the wheel.

A grinding wheel (circular, cup, or the like) comprises an inner molded second resin intimately bonded to an outer periphery molded second resin containing abrasive particles. Advantageous abrasive particles are diamond and CBN. Advantageously, both the first and second resins are the same. Preferably, such resins comprise a polyetherimide resin.

Use of thermoplastic pellets in the injection molding art is well-known. However, such pellets usually are filled, *e.g*., with fillers, pigments, and the like. A wide variety of plastic parts, however, can be suitably molded from such thermoplastic resin pellets. Storage and handling of the resin is facilitated thereby also. Such pellets can range in size from around 0.02 mm to about 50 mm in size.

The invention uses injection molding thermoplastic pellets to advantage by filling such pellets with abrasive particles, preferably superabrasive particles. The composite moldable pellets then can be used in an injection molding process where the outer periphery or edge of the abrading/grinding wheel is formed therefrom. Desirably, also, the entire wheel is made from a resinous material with the abrasive content of the interior of the wheel being low at most and typically devoid of abrasive particle content.

A wide variety of abrasive particles are contemplated by the invention, including, for example, diamond, CBN, alumina, SiC, garnet, and the like and mixtures thereof. Diamond particles can be natural or synthetic. Synthetic diamond particles can be made by conventional high pressure/high temperature (HP/HT) techniques or by conventional chemical vapor deposition (CVD) techniques. The manufacture of CBN by the high pressure/high temperature (HP/HT) process is known in the art and is typified by the process described in U.S. Pat. No. 2,947,617, a basic monocrystalline CBN case. An improvement on the direct conversion process is disclosed in U.S. Pat. No. 4,289,503 wherein boric oxide is removed from the surface of the HBN powder before the conversion process. The other abrasives also are well-known and need little additional description here. The abrasive particles can be used neat or coated.

The particle sizes of the abrasive particles for use herein range from microscopic particles (*e.g*., -600 mesh) up to around 5 mesh (US Standard Sieves Series). Such particles can be in the shape of regular geometric solids, irregular geometric solids, fibers, agglomerates, and the like. There is virtually no limitation on the shape of the abrasive particles suitable for use in the present invention.

The amount of such particles can range up to around 65 vol-%, based on the total solids including secondary grit such as, for example, ceramic boride, diamond or CBN fines, nitride, oxide; any thermal management particles including, for example, Cu, Fe, Sn, bronze powders, and the like; additives including, for example, carbon fibers or particles, silica powder, alumina, and silicon; and any coatings applied to the abrasive particles, such as, for example, Ni, Cu, Cr, Fe, Co, Sn, W, Ti, or an alloy thereof. The ability for form molded parts from moldable abrasive pellets is limited in practical terms only by the melt viscosity of the resin plus solids, mold dimensions (*i.e*., thickness and diameter), the sensitivity of viscosity to temperature, pressure and shear rate, and the maximum pressure and shear rate available in the molding machine. Temperature is limited by the thermal stability of the resin and the solids.

While the preferred moldable resin will be thermoplastic, thermosetting resins can be molded and then cured outside the mold, for example, with ultraviolet radiation (UV) or the like. Any moldable resin heretofore used in the abrasive art field is suitable for use in accordance with the precepts of the present invention. One class of preferred moldable resins comprise polyetherimide resins. The basic polyetherimides are known in the art and generally are prepared by reacting an organic diamine with an aromatic bis(ether dicarbonyl), *i.e.* an aromatic bis(ether anhydride) or an aromatic bis(ether dicarboxylic acid). Such polyetherimides are shown, for example, in U.S. Patents Nos. 3,803,805, 3,787,364, 3,917,643, and 3,847,867, the disclosures of which are expressly incorporated herein by reference.

Other classes of resins include, *inter alia,* bis-maleimide-triazine addition copolymer resins, polyetheretherketone (PEEK) resins, polyetherketone (PEK) resins, polyaryletherketone resins, poly(amide-imide) resins, polyphenylene sulfide (PPS) resins, liquid crystal polymers (LCP), aromatic polycarbonate resins, and the like, and mixtures thereof. So long as the resin can be molded, it can be used to form the novel composite abrasive pellets of the present invention.

Another class of composite abrasive pellets utilizes a majority of a metal added to the moldable resin along with the abrasive particles. Such metal-resin-abrasive pellets can be molded into a variety of shapes and subjected to a furnace to sinter the metal and burn off the plastic (resin) to leave a metal-abrasive molded part with defined porosity residual from the resin being burned off. Such parts may be used in a variety of applications where metal-abrasive parts may be useful, including, for example, brake pads. Thus, a variety of metal-abrasive tools or wear/friction body/surfaces can be made from such metal-resin-abrasive pellets.

In cut-off wheel or grinding applications, the inventive moldable composite abrasive pellets can be molded into wheels, discs, cylinders (with and without holes), flutes, and the like. Thickness' can range from about 0.06 inches to about 3 inches with outside diameters from about 1 inch to about 36 inches. The profile of the molded part can be straight (linear sides) or it can be curved (curvilinear) or combinations thereof. In molded slots, relief's, apertures, collets, spindles, and the like also can be achieved.

In practicing the present invention, it can be helpful to ensure that the abrasive particle can be wetted by the resin and well-distributed in the resin such that there is minimal grit-grit or solid-solid contact in the molded part to ensure the formation of a good bond therebetween. This ensures that the resin will adequately hold or retain the abrasive particle in the final part during use. In this effort, the use of coatings applied to the abrasive particle will be helpful, as those skilled in this art will appreciate. It also is helpful that the thermal expansion coefficient and bulk compliance of the grits and solids in the resin, be much lower than the matrix resin, at the pressure, temperature, and shear rate conditions of the molding operation. This is to ensure that, upon cooling and decompression in the mold, the resin contracts around and compresses the solid grits, improving retention in subsequent wear part or tool. Furthermore, a practical limitation on compression stress on the solids is the yield strength of the matrix. This needs to be as high as possible, yet still maintain facility to be flowable and moldable. Additionally, it is important that the matrix upon decompression and cooling has minimal tendency to crack or become brittle, as this would impair part performance in a tool or wear application and could jeopardy operator safety. It is also important that all porosity be eliminated from the part during molding operation

The composite abrasive pellets will be formed with conventional extruding machines wherein the molten resin, abrasive particles, and additives are extruded and the extrudate sub-divided to produce pellets of the desired size (*e.g*., ranging in size from about -600 to about 5 mesh) with abrasive concentrations ranging up to around 65 vol-%. The thus-formed composite abrasive pellets can be easily stored, transported, and then used in molding operations including, for example, compression molding, injection molding, co-injection molding, and the like.

The part can be post-molded processed, such as, for example, ground to a particular size or shape, sharpened, annealed, fixtured, or the like. In fact, there is no reason that blades made from the novel composite abrasive pellets cannot be sharpened in use, for example, sharpen a lawnmower blade made from the novel composite abrasive pellets should the blade become nicked during use. There is virtually no restriction as to the parts that can be made from the novel composite abrasive pellets in accordance with the precepts of the present invention.

While the invention has been described with reference to a preferred embodiment, those skilled in the art will understand that various changes may be made and equivalents may be substituted for elements thereof without departing from the scope of the invention. In addition, many modifications may be made to adapt a particular situation or material to the teachings of the invention without departing from the essential scope thereof. Therefore, it is intended that the invention not be limited to the particular embodiment disclosed as the best mode contemplated for carrying out this invention, but that the invention will include all embodiments falling within the scope of the appended claims. In this application all units are in the metric system and all amounts and percentages are by weight, unless otherwise expressly indicated. Also, all citations referred herein are expressly incorporated herein by reference.

### EXAMPLES

### EXAMPLE 1

In order to evaluate the concentration of diamond particles that could be used in forming the moldable abrasive composite pellets, three batches were prepared from a dry powder blend "100% mix" comprising 62% by volume solids. Two other dilution batches comprising 50% and 37% by volume solids were prepared as follows. First, 100 grams of Ultem® 1000 fine grinds (Ultem® 1000 polyether imide, 1.27 specific gravity, ASTM D792; Rockwell Hardness (M-Scale) 109, ASTM D785; GE Plastics, Pittsfield, MA USA) were added to 200 grams of a "mix" consisting of RVG diamond (RVG WS60 diamond (nickel coated diamond, 3.52 g/cc, 60% coating level, GE Superabrasives, Worthington, OH USA), TiB₂, Cu, and diamond fines (labelled as "50%"). The second batch was formulated from 25 grams Ultem® 1000 fine grinds with 100 grams of the mix (labelled as "75%"). Both formulations were dried overnight in a vacuum oven held at a temperature of 140° C. Each formulation was placed in a can with chains added to increase compounding and shook on a paint-type shaker for 30 minutes.

### Extruder Preparation

The extruder was preheated to 750° F and calibrated (zeroed for baseline). Ultem® 1010 pellets (Ultem® 1010 polyether imide, 1.27 specific gravity, ASTM D792; Rockwell Hardness (M-Scale) 109, ASTM D785; GE Plastics, Pittsfield, MA USA) were fed through the screw to clean out any contamination. After a clean stream of Ultem® exited the die nozzle, data collection commenced and flow rates were calculated. Next, Ultem® 1000 fine grinds were fed through the extruded to evaluate the flow rates of this material. It was determined that a higher screw rate (higher RPM) was required for the 1000 grade pellets than for the 1010 pellets.

After about 30 minutes of running clean resin pellets through the extruder, the 50% mix was fed and data collected. Thereafter, the 75% mix was fed through the extruder and data collected. Both of these mixes ran without incident, *i*.*e*., pressure and torque were well with in operating parameters. At about 54 minutes, the 100% mix was added with the loading hopper. The machine then over-torqued and shut down.

A summary of the operating parameters and data collected from the extruder are set forth below.

**TABLE 1**

| Summary Data | | | | |
|---|---|---|---|---|
| SAMPLE | TORQUE AVG. (m/g) | PRESSURE (psi) | FLOW RATE (g/min) | RPM |
| Control 1010 pellets | 700 | 1-2 | 20 | 25 |
| Control 1000 pellets | 800 | 1-2 | 13 | 35 |
| 50% Mix | 1000 | 9 (peak) | 30 | 26 |
| 75% Mix | 1050 | 27 (peak) | 33 | 26 |
| 100% Mix | 18000-20000 | 634 (peak) | Steadily decreased | Steadily decreased |

### EXAMPLE 2

In order to show that the inventive composite pellets can be molded into an effective cutting segment, conventional steel cut-off wheels having compression molded cutting segments were prepared using three different concentrations of diamond. The diamond was supplied from a compounded resin/diamond mix (i.e., moldable diamond abrasive pellets), and not from a dry powder mix as in conventional wheels. A description of the wheels follows:

**TABLE 2**

| Ultem® Resin Cutoff Wheel Specifications | |
|---|---|
| Wheel Type | 1A1 (cut-off) |
| Abrasive | RVG-W |
| Concentration | 100, 75, 50 |
| Wheel Diameter (dₛ) | 177.8 mm (7.0 in.) |
| Wheel Width (bₛ) | 1.3 to 1.6 mm (0.051 to 0.063 in.) |
| Mesh Size | 80/100 |
| Bond Type | Ultem® 1000 Resin |
| Compression Mold Conditions | 60 minutes, 750° F peak temperature, ~20ton/in² pressure |

The test conditions and workpieces tested are set forth below:

**TABLE 3**

| Test Conditions for Ultem® 1000 Slicing Blade Tests: | |
|---|---|
| Glazed Ceramic Tile | |
| Machine | Brown & Sharpe Surface Grinder |
| Grinding Mode | Creep Feed Grinding (upcut) |
| Wheel Speed (vₛ) | 37 m/s (7330 SFPM) |
| Table Speed (vw) | 3 m/min (10 fpm.) |
| Depth of Cut (aₑ) | 6.35 mm (0.250 in.) |
| Width of Cut (b_{D}) | 1.3 to 1.6 mm (0.051 to 0.063 in.) |
| Workpiece Material | Glazed Ceramic Tile |
| Workpiece Size (l x w x h) | 158.75 mm x 51.4 mm x 6.35mm (6.25 in. x 2.025 in. x .250 in.) |
| Coolant | Water with Rust Inhibitor |

| Automotive Float Glass | |
|---|---|
| Machine | Brown & Sharpe Surface Grinder |
| Grinding Mode | Creep Feed Grinding (upcut) |
| Wheel Speed (vₛ) | 37 m/s (7330 SFPM) |
| Table Speed (v_{w}) | 0.91 m/min (3 fpm.) |
| Depth of Cut (ae) | 4.12 mm (0.161 in.) |
| Width of Cut (b_{D}) | 1.3 to 1.6 mm (0.051 to 0.063 in.) |
| Workpiece Material | Automotive Float Glass |
| Workpiece Size (l x w x h) | 152.4 mm x 101.6 mm x 4.12mm (6.00 in. x 4.0 in. x .161 in.) |
| Coolant | Water with Rust Inhibitor |

| Sintered Tungsten Carbide | |
|---|---|
| Machine | Brown & Sharpe Surface Grinder |
| Grinding Mode | Surface Grinding |
| Wheel Speed (vₛ) | 37 m/s (7330 SFPM) |
| Table Speed (v_{w}) | 9.14 m/min (30 fpm.) |
| Depth of Cut (aₑ) | 25 m (0.001 in.) |
| Width of Cut (bD) | 1.3 to 1.6 mm (0.051 to 0.063 in.) |
| Workpiece Material | Tungsten Carbide (94% W, 6% Ni) |
| Workpiece Size (l x w x h) | 152.4 mm x 19.05 mm x 6.35 mm (6.00 in. x 0.750 in. x 0.250in.) |
| Coolant | Water with Rust Inhibitor |

The compounded resin/diamond wheel was compared to a conventional abrasive/resin wheel and a conventional diamond-resin compression molded wheel where the powder was prepared by try powder blending. The test results recorded are set forth below:

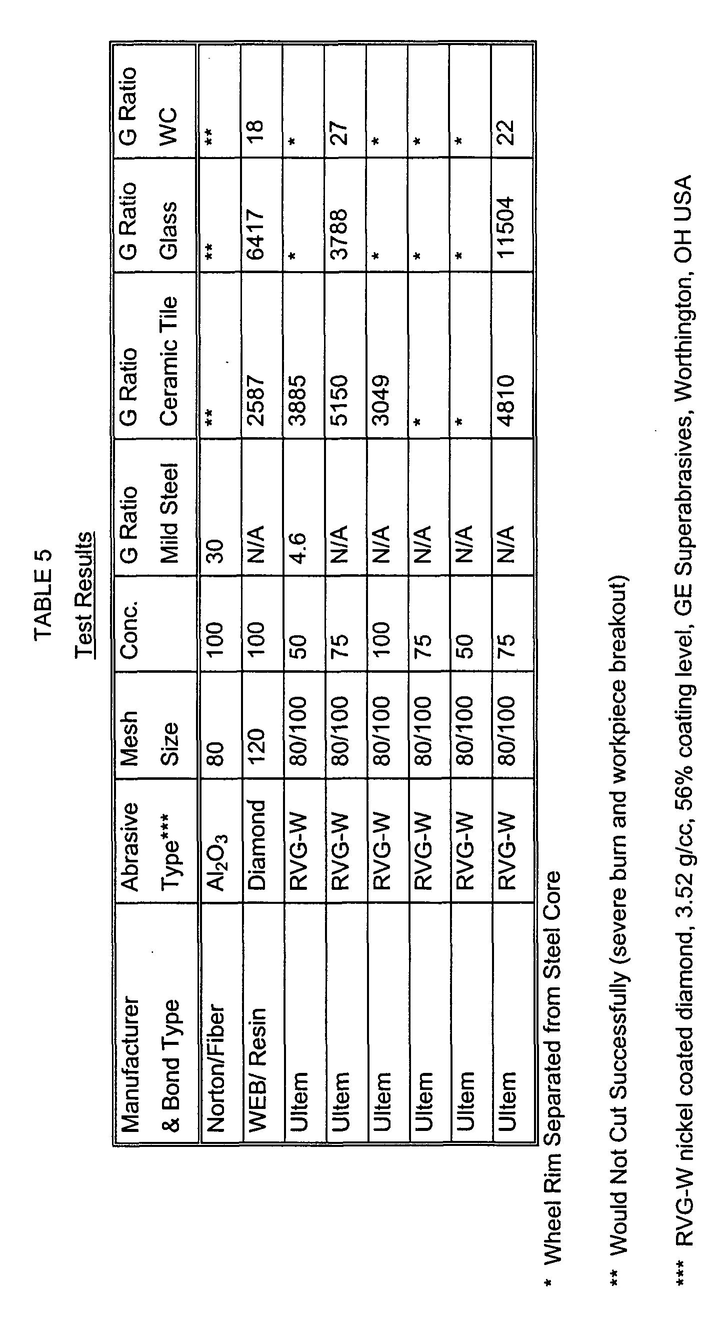

The above-tabulated results demonstrate that the inventive composite abrasive pellets performed acceptably, even at lower diamond concentration. This confirms that compounding resin with diamond prior to compression molding improves dispersion and wetting of hard grits, in comparison to conventional dry powder mixing, allowing for improved grit retention and tool wear performance.

The blades showed signs of porosity at the edge due to coarse particle size of the compounded pellets. Standard powder mixes are finer, but have not been compounded.

Also, there was an adhesion problem resin to steel, which resulted in many failed blades. This is a common fault of conventional resin-diamond wheels that requires careful cleaning of the edge of the steel, special 'teeth' to be cut into the steel edge and special adhesives to be used. Unfortunately, the pressure-temperature-time conditions for optimal steel-to-resin adhesion are not necessarily the same as those for optimal compression molding, *i.e*., adhesion of grit-to-resin, resulting in a performance compromise.

Cut deviation was excellent. This data establishes the viability of the concept of using compounded composite abrasive pellets to make cut-off, grinding, and other wheels by compression molding.

## Claims

1. A composite pellet for use in molding parts, which comprises:
discrete moldable pellets formed from a moldable resin and abrasive particles.

2. The composite pellet of claim 1, wherein said abrasive particles are one or more of diamond, cubic boron nitride (CBN), alumina, SiC, or garnet.

3. The composite pellet of claim 1 or claim 2, wherein said abrasive particles range in size from about 600 mesh to about 5 mesh.

4. The composite pellet of any preceding claim, wherein the amount of said abrasive particles ranges up to about 65 vol-%.

5. The composite pellet of any preceding claim, wherein said abrasive particles are metal coated.

6. The composite pellet of claim 5, wherein said metal is one or more of Ni, Cu, Cr, Fe, co, Sn, W, Ti, or an alloy thereof.

7. The composite pellet of any preceding claim, which additionally comprises secondary particles, which are one or more of ceramic boride, nitric oxide, Cu, Fe, Sn, bronze, C, silica, alumina, or Si.

8. The composite pellet of any preceding claim, wherein said moldable resin is one or more of a polyetherimide, bis-maleimide-triazine addition copolymer, polyetheretherketone, polyetherketone, poly(amide-imide) resin, polyphenylene sulfide (PPS) resin, liquid crystal polymers (LCP), or aromatic polycarbonate resin.

9. The composite pellet of claim 8, wherein said polyether imide is the reaction product of an organic diamine with an aromatic bis-ether dicarbonyl) or an aromatic bis(ether dicarboxylic acid).

10. A method for making a grinding/cut-off wheel, which comprises:
(a) providing a mold;
(b) providing composite pellets comprising discrete moldable pellets formed from a first moldable resin and abrasive particles;
(c) providing a second moldable resin;
(d) co-injecting said composite pellets and said second moldable resin into said mold such that the said composite pellets preferentially are distributed about the periphery of said wheel and said second moldable resin preferentially is distributed about the interior of said wheel; and
(d) curing said first and second moldable resins.

11. The method of claim 10, wherein said first and second moldable resins are the same resin.

12. A method for making an abrasive-filled part, which comprises:
(a) providing a mold;
(b) providing composite pellets comprising discrete moldable pellets formed from a first moldable resin and abrasive particles;
(c) placing said composite pellets into said mold; and
(d) curing said first moldable resin.
